# EUROPEAN PATENT APPLICATION

(11) **EP 2 573 394 A1**
(43) Date of publication of application: **27.03.2013**
(21) Application number: 11783496.0
(22) Date of filing: 16.05.2011
(51) Int. Cl.: F04B 27/14, F04B 39/00, F16B 21/18, F16F 1/18, F16F 15/02, F16F 15/06

(54) **VARIABLE-CAPACITY COMPRESSOR**

(30) Priority: 15.05.2010 JP 2010112713
(71) Applicant: Kabushiki Kaisha Toyota Jidoshokki, Kariya-shi, Aichi 448-8671 (JP)
(72) Inventor: HASHIMOTO, Yuji, Kariya-shi Aichi 448-8671 (JP); NOMURA, Kazuhiro, Kariya-shi Aichi 448-8671 (JP); NAKAIMA, Hiroyuki, Kariya-shi Aichi 448-8671 (JP); WATANABE, Yasushi, Kariya-shi Aichi 448-8671 (JP)
(74) Representative: Winter, Brandl, Fürniss, Hübner, Röss, Kaiser, Polte - Partnerschaft
(86) International application number: PCT/JP2011/061200
(87) International publication number: WO 2011/145562

(57) **Abstract**

The disclosed variable-capacity compressor is provided with a capacity control valve (2) that can change the degree to which an air-supply passage (44, 46) is open between a valve seat (VS) and a valve body (VB), thereby changing the pressure in a crank chamber (9). The capacity control valve (2) is contained within a control-valve chamber (5c) in a rear housing (5) and fixed in place by means of a circlip (50). A notch (50g) is formed between the capacity control valve (2) and the circlip (50) and/or between the circlip (50) and the rear housing (5). A gap (C) formed by the notch (50g) and the like inhibits the transmission of vibrations caused by impacts between the valve seal (VS) and the valve body (VB). This makes the variable-capacity compressor quiet, reduces costs by obviating the need for a separate member, and results in excellent durability.

## Description

### TECHNICAL FIELD

The present invention relates to a displacement control valve.

### BACKGROUND ART

A conventional variable displacement compressor includes a suction chamber, crank chamber, discharge chamber, and control valve chamber that are arranged in a housing. A displacement control valve is accommodated in the control valve chamber by way of an O-ring, and the displacement control valve is fixed by a circlip. A valve seat and a valve body are arranged in a passage that connects the discharge chamber and the crank chamber and extends through the displacement control valve. The displacement control valve, for example, changes an opening degree of the passage between the valve seat and the valve body through pulse width modulation (PWM) control to change the pressure of the crank chamber.

The variable displacement compressor is employed in an air conditioning device of a vehicle. For example, when the opening degree of the passage is increased by the PWM control during acceleration of the vehicle, high pressure refrigerant gas can easily be supplied from the discharge chamber to the crank chamber thereby decreasing displacement. On the other hand, when the opening degree of the passage is decreased by the PWM control during deceleration of the vehicle, the supply of high pressure refrigerant gas from the discharge chamber to the crank chamber is restricted thereby increasing displacement. In this manner, the variable displacement compressor can vary displacement in accordance with the vehicle speed and the like.

In the variable displacement compressor, for example, depending on an input signal of the PWM control, small impacts may repetitively occur between the valve seat and valve body. The vibration caused by the impacts is transmitted to a case of the displacement control valve. Although the vibration is not transmitted to the housing of the variable displacement compressor through the O-ring, the vibration is transmitted to the housing of the variable displacement compressor through the circlip. As a result, the variable displacement compressor and components and the like of a refrigerant circuit, which is connected to the variable displacement compressor, produce abnormal noise. This tendency becomes strong especially when the input signal (frequency) is small.

Like the variable displacement compressor disclosed in patent document 1, the circlip may be made of a vibration absorbing alloy. In such a case, the circlip suppresses vibration and restricts the transmission of vibration thereby realizing quietness.

### PRIOR ART DOCUMENT

### PATENT DOCUMENT

Patent Document 1: Japanese Laid-Open Patent Publication No. 2007-71114

### DISCLOSURE OF THE INVENTION

### PROBLEMS TO BE SOLVED BY THE INVENTION

However, the variable displacement compressor of the prior art described above uses a circlip that is made of a special vibration absorbing alloy. This raises costs.

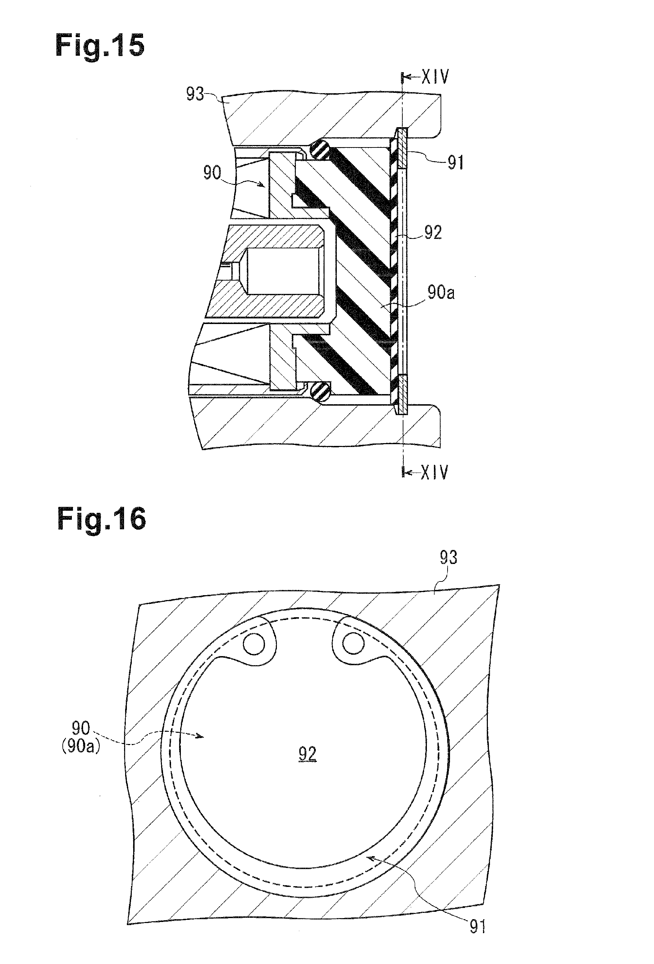

Thus, as shown in Figs. 15 and 16, a displacement control valve 90 and a conventional circlip 91 may be arranged to sandwich a rubber sheet 92. In the drawings, reference character 93 denotes a housing of a variable displacement compressor, and reference character 90a denotes a cover located at a rear end of the displacement control valve 90. A terminal and the like formed in the cover 90a to supply power to a coil is not shown in the drawings. In this case, the sheet 92 absorbs vibration and restricts the transmission of the vibration to the circlip 91 and the housing 93 for the quietness.

However, even in this compressor, the sheet 92 adds to the number of assembling steps and increases the component price thereby inevitably raising costs. Further, the sheet 92 may deteriorate when the compressor is used for a long period. This may adversely affect the quietness and the sealing between the housing 93 and the displacement control valve 90.

It is an object of the present invention to provide a variable displacement compressor that can realize quietness and have superior durability, while lowering costs by eliminating the need for additional components.

### MEANS FOR SOLVING THE PROBLEM

One aspect of the present invention is a variable displacement compressor including a housing including a suction chamber, a crank chamber, a discharge chamber, and a control valve chamber. A displacement control valve is accommodated in the control valve chamber and fixed to the housing by a circlip, which is engaged with an engagement groove of the housing. The displacement control valve includes a valve seat and a valve body arranged in a passage connecting the discharge chamber and the crank chamber or a passage connecting the crank chamber and the suction chamber. The valve body is accommodated in a valve case. An external signal is input to a coil to change an opening degree of the passage between the valve seat and the valve body so that pressure of the crank chamber can be changed. The coil is protected by a cover. Vibration generated by impact between the valve seat and the valve body is transmitted through a path extending from the valve seat via the valve case and the circlip to the housing. At least one of the circlip, the cover, and the engagement groove includes a cutout or a recess in the path. A clearance defined by the cutout or the recess forms a means for suppressing transmission of the vibration.

In a first embodiment, the circlip includes a C-shaped engagement portion, which engages with the engagement groove, and a wide portion, which is formed at two ends of the engagement portion and has a fitting hole into which pliers is fitted. The engagement portion includes the cutout formed in a widthwise direction to avoid contact with the displacement control valve. The vibration transmitting suppressing means is the clearance defined by the cutout.

In a further embodiment, the circlip includes an opposing surface that opposes the displacement control valve. The displacement control valve includes an end surface that opposes the opposing surface. The end surface includes the recess that avoids contact with the opposing surface. The vibration transmitting suppressing means is the clearance defined by the recess.

In a further embodiment, the circlip includes an opposing surface that opposes the displacement control valve. The displacement control valve includes an end surface that opposes the opposing surface. The opposing surface includes the recess that avoids contact with the end surface. The vibration transmitting suppressing means is the clearance defined by the recess.

In a further embodiment, the engagement groove is defined by a first engagement surface and a second engagement surface that are spaced apart by an equal distance in a circumferential direction. The circlip includes a first surface and a second surface spaced apart by an equal distance in the circumferential direction to engage with the engagement groove. At least one of the first surface and the second surface includes a recess for avoiding contact with the first engagement surface and the second engagement surface. The vibration transmitting suppressing means is the clearance defined by the recess.

In a further embodiment, the engagement groove is defined by a first engagement surface and a second engagement surface that are spaced apart by an equal distance in a circumferential direction. The circlip includes a first surface and a second surface spaced apart by an equal distance in the circumferential direction to engage with the engagement groove. At least one of the first engagement surface and the second engagement surface includes the recess so that the distance between the first engagement surface and the second engagement surface is greater than the thickness of the circlip to avoid contact with the first surface and the second surface. The vibration transmitting suppressing means is the clearance defined by the recess.

In a further embodiment, the vibration transmitting suppressing means is a means for attenuating vibration transmitted in at least either one of between the displacement control valve and the circlip and between the circlip and the housing.

In a further embodiment, the cover is sealed by an O-ring, and the vibration attenuating means is the recess formed in a circumference of the cover closer to an opening of the control valve chamber than the O-ring.

In a further embodiment, the engagement groove is defined by a first engagement surface and a second engagement surface spaced apart by an equal distance in a circumferential direction. The circlip is elastically deformable. The distance between the first engagement surface and the second engagement surface of the engagement groove is greater than the thickness of the circlip so that the circlip elastically deforms to obtain the clearance between the first engagement surface and the second engagement surface. The vibration attenuating means is the clearance.

### BRIEF DESCRIPTION OF THE DRAWINGS

Fig. 1 is a cross-sectional view of a variable displacement compressor according to first to eighth embodiments.
Fig. 2 is a cross-sectional view of a displacement control valve according to the first to eighth embodiments.
Fig. 3 is an enlarged cross-sectional view showing the main part of the variable displacement compressor in the first embodiment.
Fig. 4 is a cross-sectional view taken along line IV-IV in Fig. 3.
Fig. 5 is a plan view showing a circlip of the variable displacement compressor in the second embodiment.
Fig. 6 is a cross-sectional view of the compressor in the second embodiment corresponding to Fig. 4.
Fig. 7 is an enlarged cross-sectional view showing the main part of the variable displacement compressor in the third embodiment.
Fig. 8 is a bottom view of the displacement control valve in the compressor of the third embodiment.
Fig. 9 is a cross-sectional view taken along line IX-IX in Fig. 7.
Fig. 10 is an enlarged cross-sectional view showing the main part of the variable displacement compressor in the fourth embodiment.
Fig. 11 is an enlarged cross-sectional view showing the main part of the variable displacement compressor in the fifth embodiment.
Fig. 12 is an enlarged cross-sectional view showing the main part of the variable displacement compressor in the sixth embodiment.
Fig. 13 is an enlarged cross-sectional view showing the main part of the variable displacement compressor in the seventh embodiment.
Fig. 14 is an enlarged cross-sectional view showing the main part of the variable displacement compressor in the eighth embodiment.
Fig. 15 is an enlarged cross-sectional view showing the main part of a variable displacement compressor in a comparative example.
Fig. 16 is a cross-sectional view of the compressor in the comparative example of Fig. 15 taken alone line XIV-XIV in Fig. 15.

### DETAILED DESCRIPTION OF THE INVENTION

First to eighth embodiments of the present invention will now be described with reference to the drawings.

### (First Embodiment)

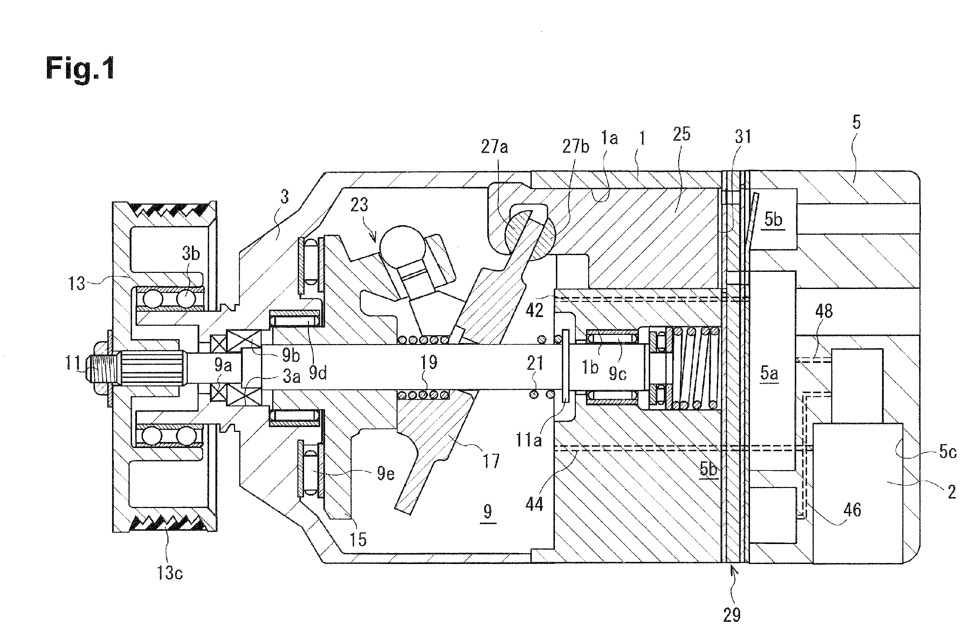

As shown in Fig. 1, a variable displacement compressor according to a first embodiment is provided with a cylinder block 1 including a plurality of cylinder bores 1a. The cylinder bores 1a are concentrically arranged at equal angular intervals and extend parallel to one another in the cylinder block 1. The cylinder block 1 is held between a front housing 3 and a rear housing 5 and fastened in this state. A crank chamber 9 is defined in the cylinder block 1 and the front housing 3.

The front housing 3 includes a shaft hole 3a, and the cylinder block 1 includes a shaft hole 1 b. The shaft holes 3a and 1b b rotatably receive a drive shaft 11 with a shaft seal 9a and bearings 9b and 9c. A pulley 13 is arranged on the front housing 3 by way of a bearing 3b, and the pulley 13 is fixed to the drive shaft 11. A belt 13c, which is driven by an engine or a motor of a vehicle, runs about the pulley 13. An electromagnetic clutch may be used instead of the pulley 13.

In the crank chamber 9, a lug plate 15 is press-fitted to the drive shaft 11, and bearings 9d and 9e are arranged between the lug plate 15 and the front housing 3. A swash plate 17 is fitted to the drive shaft 11. A spring 19, which decreases a tilt angle of the swash plate 17 about the drive shaft 11, is arranged between the lug plate 15 and the swash plate 17. In the crank chamber 9, a circlip 11a is fixed to the drive shaft 11, and a return spring 21 is arranged to the circlip 11a facing toward the swash plate 17. A link mechanism 23, which supports the swash plate 17 in a tiltable manner, couples the lug plate 15 and the swash plate 17. In the present specification, the term circlip is analogous to snap ring.

Each cylinder bore 1a accommodates a piston 25 that is movable back and forth. Shoes 27a and 27b, which form a pair, are arranged between each piston 25 and the swash plate 17. The pairs of the shoes 27a and 27b convert the wobbling movement of the swash plate 17 into a reciprocating movement of the pistons 25.

A valve unit 29 is arranged between the cylinder block 1 and the rear housing 5. A compression chamber 31 is formed between the piston 25 of each cylinder bore 1a and the valve unit 29. The valve unit 29 draws refrigerant from a suction chamber 5a into the compression chamber 31 when the piston 25 is in the suction stroke, encloses the refrigerant in the compression chamber 31 when the piston 25 is in the compression stroke, and discharges the refrigerant in the compression chamber 31 to a discharge chamber 5b when the piston 25 is in the discharge stroke.

The rear housing 5 includes the suction chamber 5a, which is located inward in the radial direction, and the discharge chamber 5b, which is annular and located outward in the radial direction. A bleeding passage 42 connects the crank chamber 9 and the suction chamber 5a. Supplying passages 44 and 46 connect the crank chamber 9 and the discharge chamber 5b. The rear housing 5 includes a control valve chamber 5c defined by a cylindrical cavity. The control valve chamber 5c accommodates a displacement control valve 2, which is in communication with the suction chamber 5a through a pressure detection passage 48 and which is in communication with the supplying passages 44 and 46.

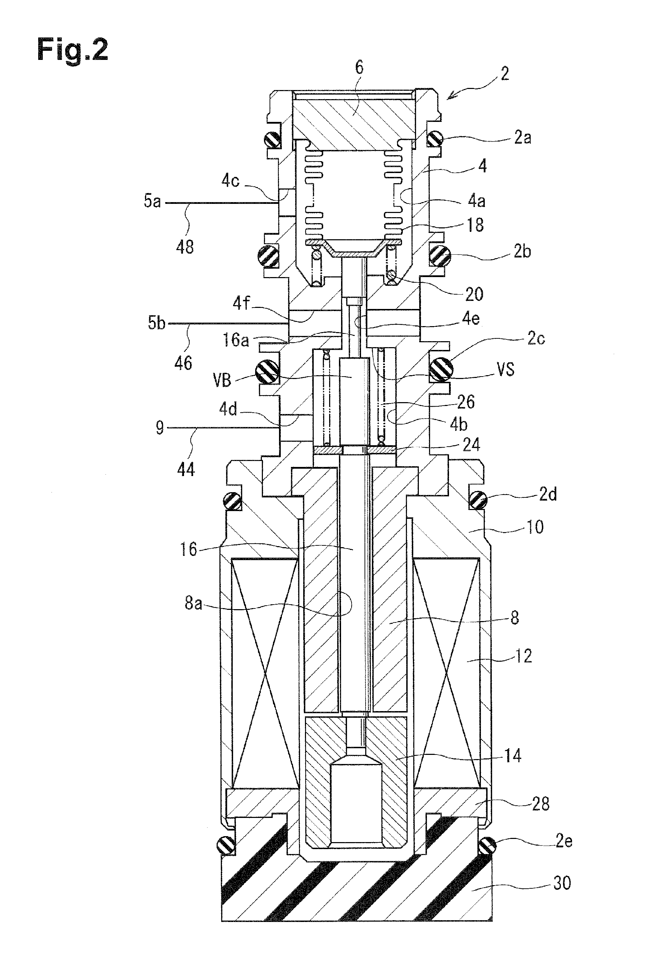

As shown in Fig. 2, the displacement control valve 2 includes a first case 4 and a second case 10 that form a valve case, which serves as a shell. An upper end portion of the first case 4 defines a detection chamber 4a, and a lower end portion of the first case 4 defines a valve chamber 4b. A side surface of the first case 4 includes a suction port 4c that opens the detection chamber 4a to the exterior. The suction port 4c, which is in communication with the suction chamber 5a (refer to Fig. 1) through the pressure detection passage 48, is supplied with suction pressure Ps. The detection chamber 4a may be formed to supply the detection chamber 4a with flow rate differential pressure. An adjustment screw 6 is fastened to the upper end of the first case 4, and the detection chamber 4a is defined by the first case 4 and the adjustment screw 6.

A tubular fixed steel core 8 is fixed to the lower end of the first case 4. The first case 4 and the fixed steel core 8 define the valve chamber 4b. The side surface of the first case 4 includes a crank port 4d that opens the valve chamber 4b to the exterior. The crank port 4d is in communication with the crank chamber 9 (refer to Fig. 1) through the supplying passage 44 and is supplied with crank chamber pressure Pc.

The first case 4 also includes a shaft hole 4e, which extends in the axial direction. The shaft hole 4e communicates the detection chamber 4a and the valve chamber 4b. The side surface of the first case 4 includes a discharge port 4f that opens the shaft hole 4e to the exterior and extends in the radial direction. The discharge port 4f is in communication with the discharge chamber 5b (refer to Fig. 1) through the supplying passage 46 and is supplied with discharge pressure Pd.

The second case 10, which is tubular, is fixed to the lower end of the first case 4, and a coil 12 is fixed around the fixed steel core 8 in the second case 10. An input signal for the PWM control, which is an external signal, is input to the coil 12 through a terminal (not shown). In the present embodiment, the side at which the coil 12 is arranged is referred to as the lower end side, and the opposite side is referred to as the upper end side.

A shaft hole 8a extends through the fixed steel core 8 coaxially with the shaft hole 4e. A movable steel core 14 is located at a lower side of the fixed steel core 8. A rod 16, which is fixed to an upper end of the movable steel core 14, extends upward through the shaft hole 8a, the valve chamber 4b, and the shaft hole 4e and into the detection chamber 4a.

A bellows 18 is accommodated in the detection chamber 4a. The bellows 18 includes an upper end fixed to the adjustment screw 6 and a lower end fixed to the rod 16. The lower end of the bellows 18 is urged upward by a spring 20, which is arranged between the bellows 18 and the first case 4.

The upper part of the rod 16 includes a small diameter portion 16a that extends over the shaft hole 4e and the valve chamber 4b. The portion above the small diameter portion 16a of the rod 16 has a diameter that is sufficient for sealing the shaft hole 4e while allowing for movement of the rod 16, and the small diameter portion 16a has a smaller diameter than this upper portion.

A valve seat VS extends around the shaft hole 4e of the valve chamber 4b. The rod 16 includes a valve body VB, which faces the valve seat VS, bellow the small diameter portion 16a. A spring washer 24 is fixed to the rod 16 in the valve chamber 4b, and a push spring 26 is arranged between the spring washer 24 and the first case 4. In the present embodiment, the valve seat VS is formed integrally with the first case 4, and the rod including the valve body VB extends through the first case 4 and the second case 10.

A flange 28 is fixed to the lower end of the second case 10, and a cover 30 is fixed to the lower end of the flange 28 to conceal the movable steel core 14. The cover 30 is made of resin such as nylon in which glass fiber is dispersed. Part of the coil 12 is insert molded to the cover 30 in a state connected to the terminal (not shown). The cover 30 prevents lubricating oil and the like from collecting on the coil 12 and the terminal.

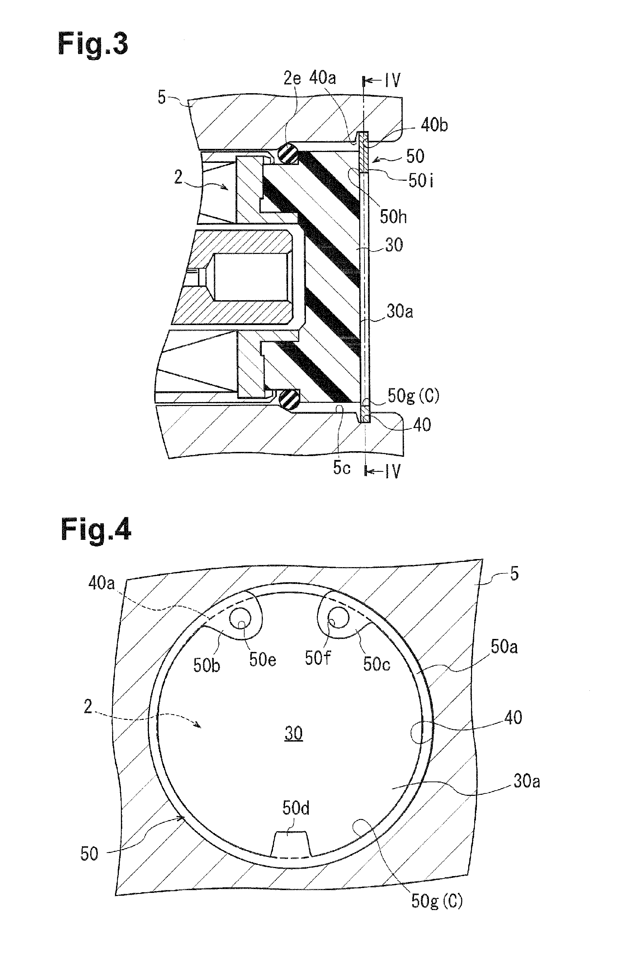

As shown in Fig. 3, a wall surface of the control valve chamber 5c in the rear housing 5 includes an engagement groove 40 for engagement with a circlip 50. The engagement groove 40 is annular and has a uniform depth from the wall surface of the control valve chamber 5c. The engagement groove 40 includes a first engagement surface 40a, which is located at an inner far side, and a second engagement surface 40b, which is located at an outer side. The first engagement surface 40a has a tapered shape, the second engagement surface 40b is orthogonal to an axis of the control valve chamber 5c, and the first engagement surface 40a and the second engagement surface 40b are spaced apart by an equal distance in the circumferential direction.

The displacement control valve 2 is accommodated in the control valve chamber 5c of the compressor by way of five O-rings 2a to 2e. The O-rings 2a to 2d seal passages from one another that are in communication with the displacement control valve 2. The O-ring 2e functions to seal and prevent the entrance of refrigerant from the exterior and absorb vibration transmitted in the radial direction of the displacement control valve 2. The circlip 50 is engaged with the engagement groove 40. The circlip 50 uses a widely-circulated material, for example, carbon steel (S-C material), spring steel (SK material), and stainless steel (SUS material). In this state, each of the O-rings 2a to 2e is forced against the wall surface of the control valve chamber 5c. Thus, the cover 30 of the displacement control valve 2 is in contact with the circlip 50.

As shown in Fig. 4, the circlip 50 includes a C-shaped engagement portion 50a, which engages the engagement groove 40, wide portions 50b and 50c formed on the two ends of the engagement portion 50a, and a wide portion 50d formed at the middle of the engagement portion 50a and projecting inward in the radial direction opposing the wide portions 50b and 50c. Fitting holes 50e, 50f, which a pliers is fitted to reduce the diameter, extend through the wide portions 50b and 50c.

The circlip 50 shown in Fig. 4 differs from the conventional circlip 91 shown in Fig. 16 in that the engagement portion 50a is narrow excluding the wide portions 50b to 50d. More specifically, the engagement portion 50a includes a cutout 50g, which avoids contact with the cover 30 of the displacement control valve 2, defined at an inner side of the C-shaped main body. The cutout 50g defines a clearance C that serves as a vibration transmitting suppressing means and a contact area reducing means. That is, the cutout 50g reduces the contact area between the cover 30 and the circlip 91 and lowers the rigidity of the cover 30. This decreases the spring constant and shifts the resonance frequency to a low frequency thereby lowering the peak frequency and suppressing the transmission of vibration.

As shown in Fig. 3, the circlip 50 includes a first surface 50h, which faces the first engagement surface 40a and the cover 30, and a second surface 50i, which faces the second engagement surface 40b. The first surface 50h and the second surface 50i engage the first engagement surface 40a and the second engagement surface 40b, respectively. The first surface 50h and the second surface 50i are parallel. The first surface 50h, which is an opposing surface opposing the cover 30, can contact the cover 30 at the locations of the wide portions 50b to 50d but cannot contact the cover 30 at the location of the engagement portion 50a. Thus, the parts of the first surface 50h at the wide portions 50b to 50d serves as contact surfaces that come into contact with the cover 30. The cover 30 includes a surface 30a that contacts the first surface 50h or the second surface 50i where the wide portions 50b to 50d are located.

In a vehicle air conditioner, the above compressor has the discharge chamber 5b, which is shown in Fig. 1, connected to a condenser. The condenser is connected by an expansion valve to an evaporator, and the evaporator is connected to the suction chamber 5a. When the drive shaft 11 is driven and rotated by an engine or the like, the refrigerant in the suction chamber 5a is compressed in the compression chambers 31 and discharged to the discharge chamber 5b with a displacement corresponding to the tilt angle of the swash plate 17.

During this operation, for example, when the vehicle is accelerated and the PWM control increases the opening degree between the valve seat VS and the valve body VB shown in Fig. 2, high pressure refrigerant gas is easily supplied in from the discharge chamber 5b to the crank chamber 9 through the discharge port 4f, the shaft hole 4e, the valve chamber 4b, and the crank port 4d. This decreases the displacement. On the other hand, when the speed of the vehicle is constant and the PWM control decreases the opening degree between the valve seat VS and the valve body VB, the supply of high pressure refrigerant gas from the discharge chamber 5b to the crank chamber 9 is restricted. This increases the displacement. Thus, in the compressor, the displacement is varied in accordance with the vehicle speed and the like.

In this compressor, an input signal of the PWM control is transmitted to the coil 12 and transmitted by the rod 16 to the valve body VB. Thus, when the opening degree of the valve seat VS and the valve body VB is small, the valve body VB impacts the valve seat VS a number of times. The vibration generated by the impact of the valve seat VS and the valve body VB in the displacement control valve 2 is transmitted over a path extending through the case 10 from the valve seat VS to the rear housing 5.

However, in this compressor, the clearance C formed by the cutout 50g shown in Figs. 3 and 4 is arranged in the path and suppresses the transmission of the vibration generated by the impact of the valve seat VS and the valve body VB. This restricts the transmission of the vibration to the rear housing 5 and accomplishes noise reduction.

This compressor does not employ a sheet, which is an additional member that increases the number of assembling steps and increases the cost of components. Further, the circlip 50 is made of a typical SUS. Thus, the compressor lowers cost. In particular, in the compressor, the rear housing 5 includes the engagement groove 40, which is normal, and only the shape of the circlip 50 is special. Thus, costs are subtly increased. The compressor does not employ a rubber sheet that may deteriorate when used over a long period. Thus, quietness and sealing can be achieved over a long period.

Accordingly, the compressor reduces noise, lowers cost, and has superior durability.

### (Second Embodiment)

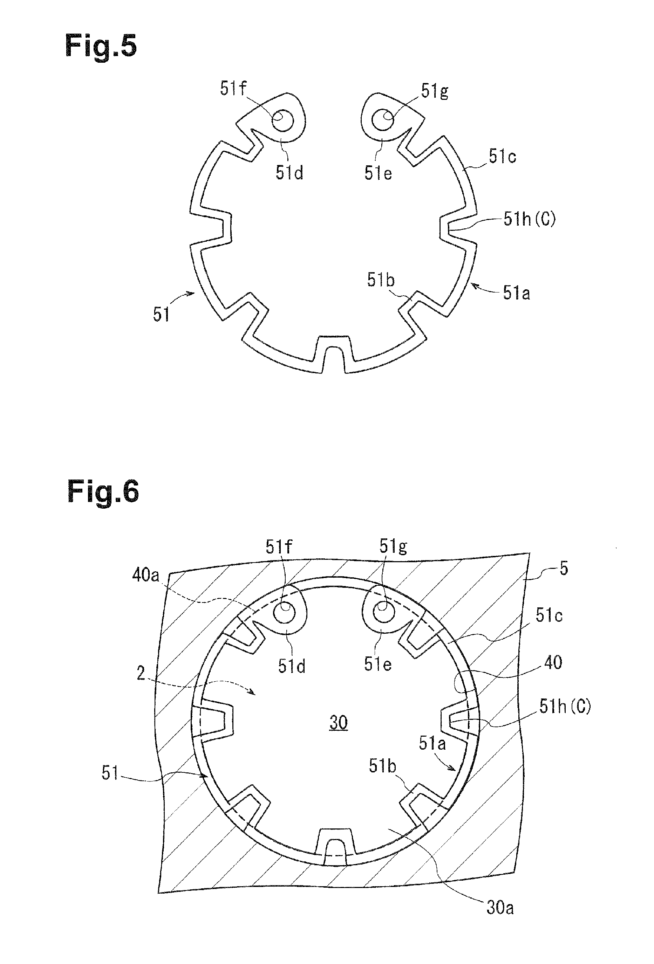

A compressor of a second embodiment employs a circlip 51 shown in Figs. 5 and. 6. In the circlip 51, an engagement portion 51a includes a small diameter portion 51b and a large diameter portion 51c that are successively bent. Fitting holes 51f and 51g used to reduce the diameter are formed in wide portions 51d and 51e. The parts of the small diameter portion 51b bent toward the large diameter portion 51c forms a cutout 51h that avoids contact with the cover 30 of the displacement control valve 2. The clearance C formed by the cutout 51h serves as the vibration transmitting suppressing means and the contact area reducing means. That is, the cutout 50h reduces contact between the cover 30 and the circlip 51 and suppresses the transmission of vibration. Otherwise, the structure is the same as the first embodiment.

The second embodiment has the same advantages as the first embodiment.

### (Third Embodiment)

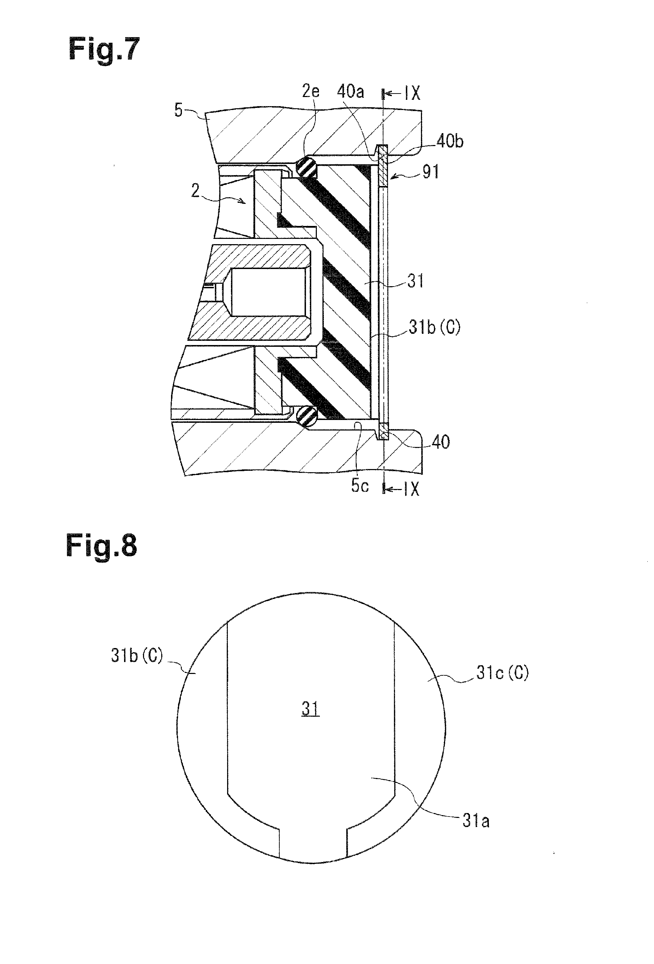

As shown in Figs. 7 to 9, a compressor of a third embodiment employs a novel cover 31 while employing the conventional circlip 91 shown in Fig. 15 and Fig. 16. As shown in Fig. 8, recesses 31 b and 31c are arranged at two opposite sides of a surface 31 a of the cover 31 facing the circlip 91. The recesses 31b and 31c avoid contact between the cover 31 and the circlip 91. A clearance C formed by the two recesses 31 b and 31c serves as the vibration transmitting suppressing means and the contact area reducing means. That is, the recesses 31b and 31c reducing the contact area between the cover 31 and the circlip 91 and suppress the transmission of vibration. Otherwise, the structure is the same as the first embodiment.

The third embodiment also has the same advantages as the first embodiment. In particular, in the compressor of the third embodiment, the conventional circlip 91 is employed, and only the shape of the cover 31 of the displacement control valve 2 is special. Thus, costs are subtly increased.

### (Fourth Embodiment)

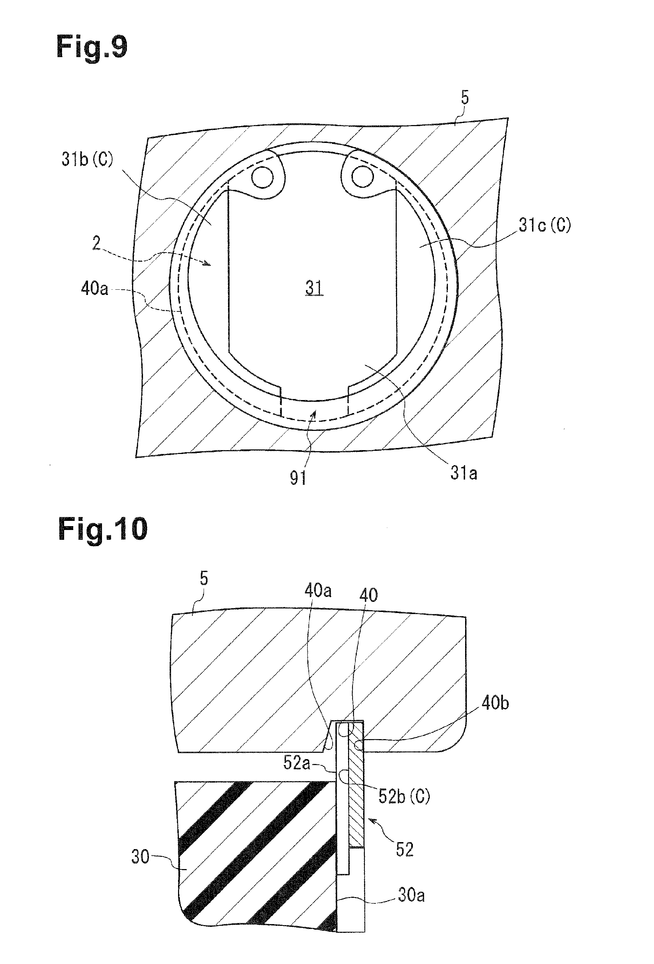

As shown in Fig. 10, a compressor of a fourth embodiment employs a novel circlip 52 while employing the conventional cover 30 and the engagement groove 40 shown in Figs. 1 to 4. A plurality of recesses 52b are arranged in a circumferential direction in a surface 52a, which comes into contact with the cover 30, at one side of the circlip 52. The recesses 52b avoid contact between the cover 30 and the circlip 52. A clearance C formed by each recess 52b serves as the vibration transmitting suppressing means and the contact area reducing means. That is, the recesses 52b reduce the contact area between the cover 30 and the circlip 52 and between the circlip 52 and the rear housing 5. This suppresses the transmission of vibration. Otherwise, the structure is the same as the first embodiment.

The fourth embodiment also has the same advantages as the first embodiment. In particular, in the compressor of the fourth embodiment, the conventional displacement control valve 2 is employed, and only the shape of the circlip 52 is special. Thus, costs are subtly increased.

### (Fifth Embodiment)

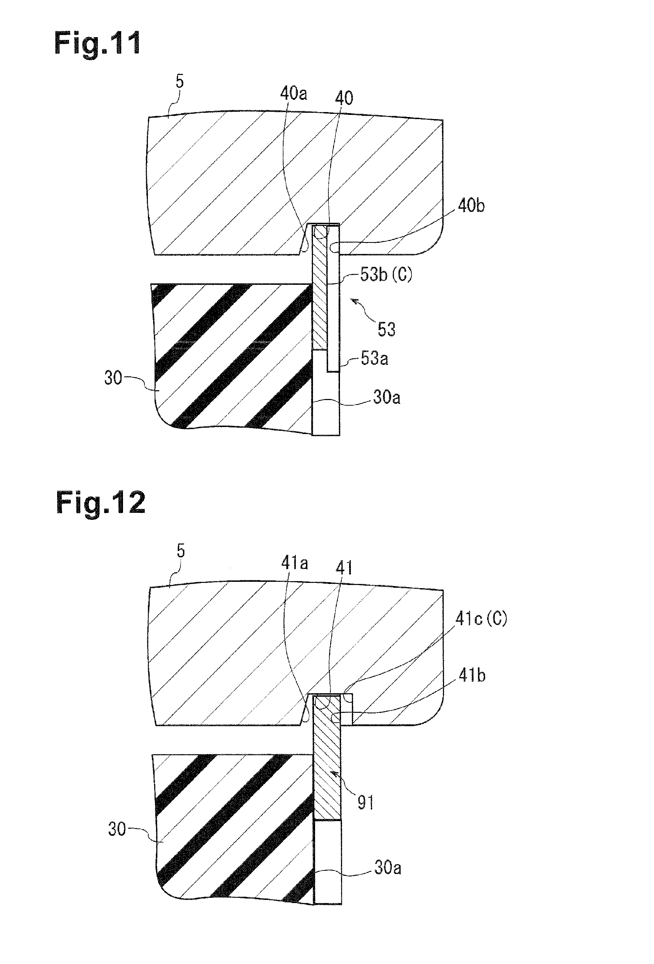

As shown in Fig. 11, in a compressor of a fifth embodiment, a circlip 53 has a second surface 53a facing the second engagement surface 40b of the engagement groove 40 on the side opposite to the surface that comes into contact with the cover 30. A plurality of recesses 53b are arranged in the circumferential direction in the second surface 53a. The recesses 53b avoid contact between the circlip 53 and the rear housing 5. A clearance C formed by each recess 53b serves as the vibration transmitting suppressing means and the contact area reducing means. That is, the recesses 53b reduce the contact area between the circlip 53 and the rear housing 5 and suppresse the transmission of vibration. Otherwise, the structure is the same as the fourth embodiment.

The fifth embodiment also has the same advantages as the fourth embodiment.

### (Sixth Embodiment)

As shown in Fig. 12, a compressor of a sixth embodiment employs a novel engagement groove 41 while employing the conventional cover 30 shown in Figs. 1 to 4 and the conventional circlip 91 shown in Figs. 15 and 16. The engagement groove 41 is defined by a first engagement surface 41a, which is located at the inner side (upper end side) of the control valve chamber 5c, and a second engagement surface 41 b, which is located at the open side (lower end side). A plurality of recesses 41c are arranged in the circumferential direction in the second engagement surface 41 b. In the portion where the recesses 41c are arranged, the distance between the first engagement surface 41 a and the second engagement surface 41b is greater than the thickness of the circlip 91. The recesses 41c avoid contact between the circlip 91 and the rear housing 5. A clearance C formed by each recess 41c serves as the vibration transmitting suppressing means and the contact area reducing means. That is, the recesses 41c reduce the contact area between the circlip 91 and the rear housing 5 and suppress the transmission of the vibration. Otherwise, the structure is the same as the first embodiment.

The sixth embodiment has the same advantages as the first embodiment. In particular, in the compressor of the sixth embodiment, only the shape of the engagement groove 41 is special. Thus, costs are subtly increased.

### (Seventh Embodiment)

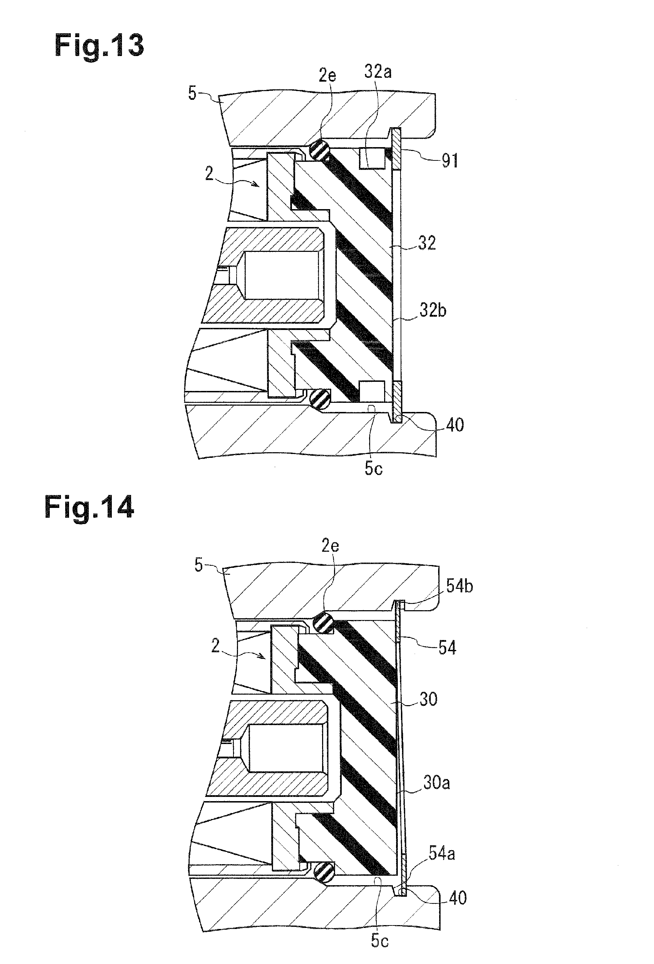

As shown in Fig. 13, a compressor of a seventh embodiment employs a novel cover 32 while employing the conventional engagement groove 40 shown in Figs. 1 to 4 and the conventional circlip 91 shown in Figs. 15 and 16. The circumferential part of the cover 32 includes a clearance 32a extending in the circumferential direction and arranged closer to the opening of the control valve chamber 5c than the O-ring 2e. The clearance 32a, which is formed by a recess, serves as the vibration transmitting suppressing means and the vibration attenuating means. That is, when the cover 32, which defines the clearance, transmits vibration, the clearance 32a deforms and attenuates the vibration. This suppresses the transmission of vibration between the cover 32 and the circlip 91. A contact surface 32b of the cover 32 contacts the circlip 91. Otherwise, the structure is the same as the first embodiment.

The seventh embodiment has the same advantages as the first embodiment. In particular, in the compressor of the seventh embodiment, the clearance 32a attenuates the vibration transmitted from the displacement control valve 2 to the circlip 91. In this case, only the shape of the cover 32 for the displacement control valve 2 is special. Thus, costs are subtly increased.

### (Eighth Embodiment)

As shown in Fig. 14, a compressor of an eighth embodiment employs a new circlip 54 while employing the conventional engagement groove 40 and cover 30 shown in Figs. 1 to 4. The circlip 54 has a thickness that is less than that of the conventional circlip 91, smaller than the distance between the first engagement surface 40a and the second engagement surface 40b of the engagement groove 40, and allows for elastic deformation to obtain clearances 54a and 54b between the engagement surfaces 40a and 40b. The clearances 54a and 54b serve as the vibration transmitting suppressing means and the vibration attenuating means. That is, the clearances 54a and 54b attenuate the vibration transmitted in at least either one of between the cover 32 and the circlip 91 and between the circlip 91 and the rear housing 5. This suppresses the transmission of the vibration between the components. Otherwise, the structure is the same as the first embodiment.

The eighth embodiment has the same advantages as the first embodiment. In particular, the compressor of the eighth embodiment is only required to employ the circlip 54 that is elastically deformable in the thicknesswise direction. Thus, costs are subtly increased.

The present invention has been described through the first to eighth embodiments. However, the present invention is not limited to the first to eighth embodiments, which may be modified within the scope of the invention.

For instance, the displacement control valve 2 may include a bleeding passage 42 that connects the crank chamber 9 and the suction chamber 5a of the variable displacement compressor.

## Claims

1. A variable displacement compressor comprising:
a housing including a suction chamber, a crank chamber, a discharge chamber, and a control valve chamber; and
a displacement control valve accommodated in the control valve chamber and fixed to the housing by a circlip, which is engaged with an engagement groove of the housing, wherein
the displacement control valve includes a valve seat and a valve body arranged in a passage connecting the discharge chamber and the crank chamber or a passage connecting the crank chamber and the suction chamber, the valve body is accommodated in a valve case, an external signal is input to a coil to change an opening degree of the passage between the valve seat and the valve body so that pressure of the crank chamber can be changed, and the coil is protected by a cover;
vibration generated by impact between the valve seat and the valve body is transmitted through a path extending from the valve seat via the valve case and the circlip to the housing, the variable displacement compressor being **characterized in that**
at least one of the circlip, the cover, and the engagement groove includes a cutout or a recess in the path, and a clearance defined by the cutout or the recess forms a means for suppressing transmission of the vibration.

2. The variable displacement compressor according to claim 1, wherein
the circlip includes a C-shaped engagement portion, which engages with the engagement groove, and a wide portion, which is formed at two ends of the engagement portion and has a fitting hole into which pliers is fitted;
the engagement portion includes the cutout formed in a widthwise direction to avoid contact with the displacement control valve; and
the vibration transmitting suppressing means is the clearance defined by the cutout.

3. The variable displacement compressor according to claim 1, wherein
the circlip includes an opposing surface that opposes the displacement control valve;
the displacement control valve includes an end surface that opposes the opposing surface;
the end surface includes the recess that avoids contact with the opposing surface; and
the vibration transmitting suppressing means is the clearance defined by the recess.

4. The variable displacement compressor according to claim 1, wherein
the circlip includes an opposing surface that opposes the displacement control valve;
the displacement control valve includes an end surface that opposes the opposing surface;
the opposing surface includes the recess that avoids contact with the end surface; and
the vibration transmitting suppressing means is the clearance defined by the recess.

5. The variable displacement compressor according to claim 1, wherein
the engagement groove is defined by a first engagement surface and a second engagement surface that are spaced apart by an equal distance in a circumferential direction;
the circlip includes a first surface and a second surface spaced apart by an equal distance in the circumferential direction to engage with the engagement groove;
at least one of the first surface and the second surface includes a recess for avoiding contact with the first engagement surface and the second engagement surface; and
the vibration transmitting suppressing means is the clearance defined by the recess.

6. The variable displacement compressor according to claim 1, wherein
the engagement groove is defined by a first engagement surface and a second engagement surface that are spaced apart by an equal distance in a circumferential direction;
the circlip includes a first surface and a second surface spaced apart by an equal distance in the circumferential direction to engage with the engagement groove;
at least one of the first engagement surface and the second engagement surface includes the recess so that the distance between the first engagement surface and the second engagement surface is greater than the thickness of the circlip to avoid contact with the first surface and the second surface; and
the vibration transmitting suppressing means is the clearance defined by the recess.

7. The variable displacement compressor according to claim 1, wherein the vibration transmitting suppressing means is a means for attenuating vibration transmitted in at least either one of between the displacement control valve and the circlip and between the circlip and the housing.

8. The variable displacement compressor according to claim 7, wherein the cover is sealed by an O-ring, and the vibration attenuating means is the recess formed in a circumference of the cover closer to an opening of the control valve chamber than the O-ring.

9. The variable displacement compressor according to claim 7, wherein
the engagement groove is defined by a first engagement surface and a second engagement surface spaced apart by an equal distance in a circumferential direction;
the circlip is elastically deformable;
the distance between the first engagement surface and the second engagement surface of the engagement groove is greater than the thickness of the circlip so that the circlip elastically deforms to obtain the clearance between the first engagement surface and the second engagement surface; and
the vibration attenuating means is the clearance.
